# EUROPEAN PATENT APPLICATION

(11) **EP 4 813 932 A1**
(43) Date of publication of application: **30.09.2026**
(21) Application number: 24894068.6
(22) Date of filing: 14.11.2024
(51) Int. Cl.: C02F 3/12, C02F 1/44

(54) **OPERATING METHOD FOR WATER TREATMENT DEVICE, AND WATER TREATMENT DEVICE**

(30) Priority: 21.11.2023 JP 2023197223
(71) Applicant: KUBOTA CORPORATION, Osaka-shi, Osaka 530-0011 (JP)
(72) Inventor: OKAJIMA, Yasunobu, Amagasaki-shi, Hyogo 661-8567 (JP); ISHIHARA, Yukako, Amagasaki-shi, Hyogo 661-8567 (JP); FUJINO, Sota, Amagasaki-shi, Hyogo 661-8567 (JP); MATSUMOTO, Erika, Amagasaki-shi, Hyogo 661-8567 (JP)
(74) Representative: Müller-Boré & Partner Patentanwälte PartG mbB
(86) International application number: PCT/JP2024/040412
(87) International publication number: WO 2025/110077

(57) **Abstract**

Provided is a method for operating a water treatment apparatus that aims to reduce an operational burden on an operator while contributing to energy conservation.

An operation method is a method for operating a water treatment apparatus including a biological treatment tank including at least an aerobic tank in which a membrane separation device is installed in an immersed state. The method includes: setting a withdrawal coefficient K (K<1) as a control factor such that a sludge withdrawal volume Qwas satisfies: sludge withdrawal volume Qwas = raw water inflow Qraw × K; operating the membrane separation device such that a filtration volume Qtrt from the membrane separation device satisfies: filtration volume Qtrt = raw water inflow Qraw × (1-K); and causing natural overflow of excess sludge from an overflow path disposed on the biological treatment tank.

## Description

### Technical Field

The present invention relates to a method for operating a water treatment apparatus and a water treatment apparatus.

### Background Art

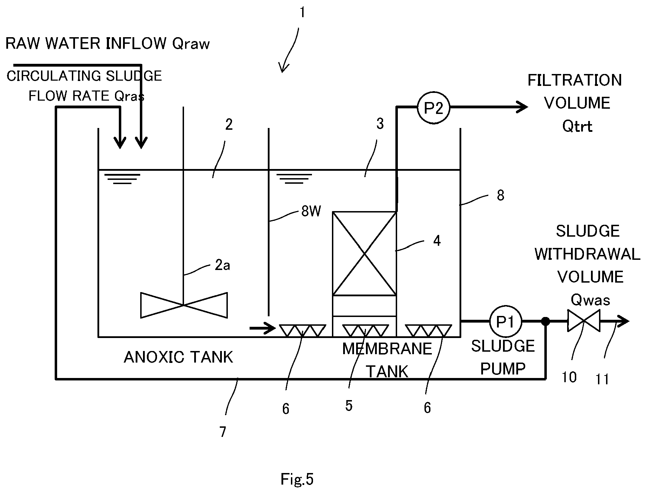

A water treatment apparatus 1 employs a Membrane Bio Reactor for purification treatment of water to be treated, which is raw water such as organic wastewater, and as shown in Fig. 5, the water treatment apparatus 1 includes: a biological treatment tank 8 including at least an anoxic tank 2 and an aerobic tank 3 in which a membrane separation device 4 is installed in an immersed state; and a sludge circulation path 7 configured to circulate sludge from the aerobic tank 3 to the anoxic tank 2.

The raw water flowing in the anoxic tank 2 is mixed with activated sludge in the tank by a stirring mechanism 2a, and then flows down to the aerobic tank 3. In the aerobic tank 3, aerobic microorganisms cause oxidative decomposition of organic matters in aerobic environment due to auxiliary aeration devices 6, nitrification treatment of ammonia components is also performed, and a part of the purified water to be treated is extracted as treated water through the membrane separation device 4. The water to be treated in the aerobic tank 3 is circulated and transported together with the sludge to the anoxic tank 2 via a sludge pump P1 and the sludge circulation path 7, and is subjected to denitrification treatment by anaerobic microorganisms in anaerobic environment in the anoxic tank 2.

In the above-described Membrane Bio Reactor, it is necessary to manipulate the operation such that a quantity of microorganisms present in the biological treatment system and viscosity of circulating activated sludge are within ranges of target control values. On this occasion, MLSS (Mixed Liquor Suspended Solids) concentration serves as a management indicator. The MLSS concentration within the system will increase depending on SS contained in the influent raw water and proliferation of microorganisms, and therefore, it is necessary to continuously or intermittently withdraw an appropriate amount to outside the system. Accordingly, a sludge withdrawal pipe 11 with a withdrawal valve 10 is coupled to and branches at the sludge circulation path 7.

Since it is difficult to accurately estimate an increment in the MLSS concentration, an operator determines a sludge withdrawal volume according to know-how dependent on individual skills and executes sludge withdrawal while measuring and monitoring the MLSS concentration within the system so as to continue to keep it in a range of control value. In general, the sludge withdrawal volume is often managed by setting up a percentage standard relative to a raw water inflow.

Patent Literatures 1 and 2 disclose such conventional arts related to withdrawal of excess sludge.

### Citation List

### Patent Literature

Patent Literature 1: Japanese Unexamined Patent Application Publication No. 2010-194482
Patent Literature 2: Japanese Unexamined Patent Application Publication No. 2013-176710

### Summary of Invention

### Technical Problem

Meanwhile, in a water treatment apparatus employing a Membrane Bio Reactor, an operator performs operation management separately from the above-described sludge withdrawal operation, that is, adjustment of a filtration volume from a membrane separation device according to an inflow of raw water, while monitoring a water level in the system.

In other words, the operator is required to monitor an amount of influent raw water and perform complex operations of independently performing respective adjustments of a withdrawal volume of treated water via a membrane separation device and a withdrawal volume of excess sludge via a sludge withdrawal pipe.

Additionally, due to increasing electric consumption required for a pump, which is driven for withdrawal of treated water or withdrawal of excess sludge, an operation method acceptable by decarbonized society has been demanded from the viewpoint of energy conservation as well.

The present invention has an object to provide a method for operating a water treatment apparatus and a water treatment apparatus, which aim to reduce an operational burden on an operator while contributing to energy conservation.

### Solution to Problem

To achieve the above-described object, a method for operating a water treatment apparatus according to a first feature of the present invention is a method for operating a water treatment apparatus including a biological treatment tank including at least an aerobic tank in which a membrane separation device is installed in an immersed state. The method includes: setting a withdrawal coefficient K (K<1) as a control factor such that a sludge withdrawal volume Qwas satisfies: sludge withdrawal volume Qwas = raw water inflow Qraw × K; operating the membrane separation device such that a filtration volume Qtrt from the membrane separation device satisfies: filtration volume Qtrt = raw water inflow Qraw × (1-K); and causing natural overflow of excess sludge from an overflow path disposed on the biological treatment tank.

In the biological treatment tank, the overflow path is installed in advance separately from a sludge withdrawal pipe to avoid overflow of the sludge from a water tank in case of occurrence of abnormality. The use of this overflow path for sludge withdrawal to cause natural overflow of the excess sludge can eliminate the need for the sludge withdrawal operation using a conventional sludge withdrawal pipe. In a steady state in which the biological treatment tank has an approximately constant water level, the sludge withdrawal volume Qwas is determined by: raw water inflow Qraw - filtration volume Qtrt. Accordingly, the operation with the filtration volume Qtrt determined as an operating factor relative to the raw water inflow Qraw allows the excess sludge to naturally overflow from the overflow path.

Specifically, the sludge withdrawal volume Qwas is managed to satisfy: sludge withdrawal volume Qwas = raw water inflow Qraw × K (K represents the withdrawal coefficient, wherein K<1), and the membrane separation device is operated such that the filtration volume Qtrt satisfies: filtration volume Qtrt = raw water inflow Qraw × (1-K). When K>0, the water level in the biological treatment tank rises and the excess sludge naturally overflows from the overflow path. In the setting of K<0, it is also possible to actively lower the water level in the biological treatment tank. The withdrawal coefficient K as the control factor may be set as appropriate relative to the raw water inflow Qraw captured by a flow sensor or the like, and may be set in advance based on a sludge conversion rate, for example. The sludge conversion rate refers to an amount of sludge generated relative to an amount of organic matters treated by water treatment equipment. For example, a BOD sludge conversion rate refers to an amount of increase in sludge (kg) relative to a BOD inflow (kg), obtained according to a calculation formula, such as {excess sludge concentration (mg/L) × excess sludge withdrawal volume (m³/day)} ÷ {wastewater BOD concentration (mg/L) × amount of wastewater (m³/day)}. For general activated sludge, the BOD sludge conversion rate is 0.3 to 0.5.

In addition to the above-described first feature, the method according to a second feature includes setting an update of the filtration volume Qtrt at a predetermined time interval based on a raw water inflow Qraw measured at the predetermined time interval.

Because of constant change in the raw water inflow Qraw, it is preferable to set the update of the filtration volume Qtrt at the predetermined time interval based on the raw water inflow Qraw measured at the predetermined time interval.

In addition to the above-described second feature, the method according to a third feature includes regularly or irregularly measuring MLSS of the biological treatment tank and performing increase or decrease adjustment of the withdrawal coefficient K based on the measured MLSS.

When the MLSS of the biological treatment tank falls below an appropriate range, the withdrawal coefficient K is decreased to reduce the sludge withdrawal volume (increase the filtration volume), thereby returning the MLSS to the appropriate range. When the MLSS increases above the appropriate range, the withdrawal coefficient K is increased to increase the sludge withdrawal volume (decrease the filtration volume), thereby returning the MLSS to the appropriate range. Accordingly, it is possible to operate the water treatment apparatus while maintaining it in a stable state.

In addition to the above-described third feature, the method according to a fourth feature includes measuring a water level in the biological treatment tank and performing increase or decrease adjustment of the withdrawal coefficient K when the measured water level deviates from a predetermined acceptable range.

Moreover, when the water level in the biological treatment tank deviates from the predetermined acceptable range, the abnormal water level can be prevented before it happens by performing increase or decrease adjustment of the withdrawal coefficient K. For example, when the filtration volume Qtrt is large relative to the raw water inflow Qraw, the withdrawal coefficient K may be set to a large value so as to avoid rapid decrease in the water level. When the filtration volume Qtrt is small relative to the raw water inflow Qraw, the withdrawal coefficient K may be set to a small value so as to avoid rapid increase in the water level.

In addition to the above-described third or fourth feature, the method according to a fifth feature includes measuring a water level in the biological treatment tank and notifying an abnormal state via a notification mechanism when the measured water level deviates from a predetermined acceptable range.

When the water level in the biological treatment tank deviates from the predetermined acceptable range, notification of the abnormal state via the notification mechanism can alert the operator to avoid a serious accident before it happens.

A water treatment apparatus according to a first feature of the present invention includes: a biological treatment tank including at least an aerobic tank in which a membrane separation device is installed in an immersed state; and a control device. The control device is configured to: set a withdrawal coefficient K (K<1) as a control factor such that a sludge withdrawal volume Qwas satisfies: sludge withdrawal volume Qwas = raw water inflow Qraw × K; operate the membrane separation device such that a filtration volume Qtrt from the membrane separation device satisfies: filtration volume Qtrt = raw water inflow Qraw × (1-K); and cause natural overflow of excess sludge from an overflow path disposed on the biological treatment tank.

### Advantageous Effects of Invention

As described above, with the present invention, it is possible to provide a method for operating a water treatment apparatus and a water treatment apparatus, which aim to reduce an operational burden on an operator while contributing to energy conservation.

### Brief Description of Drawings

Fig. 1 is a diagram illustrating a water treatment apparatus according to a first embodiment of the present invention.
Fig. 2 is a diagram illustrating a water treatment apparatus according to a second embodiment of the present invention.
Fig. 3A is a perspective view of a water treatment apparatus according to a third embodiment of the present invention, a part of which is cut away.
Fig. 3B is a diagram illustrating the same in plan view.
Fig. 4A is a diagram illustrating a first aspect in a cross-sectional view taken along A-A in Fig. 3B.
Fig. 4B is a diagram illustrating a second aspect in the same.
Fig. 5 is a diagram illustrating a conventional water treatment apparatus.

### Best Mode for Carrying out the Invention

Hereinafter, a method for operating a water treatment apparatus and a water treatment apparatus according to the present invention will be described based on the drawings.

### [First Embodiment]

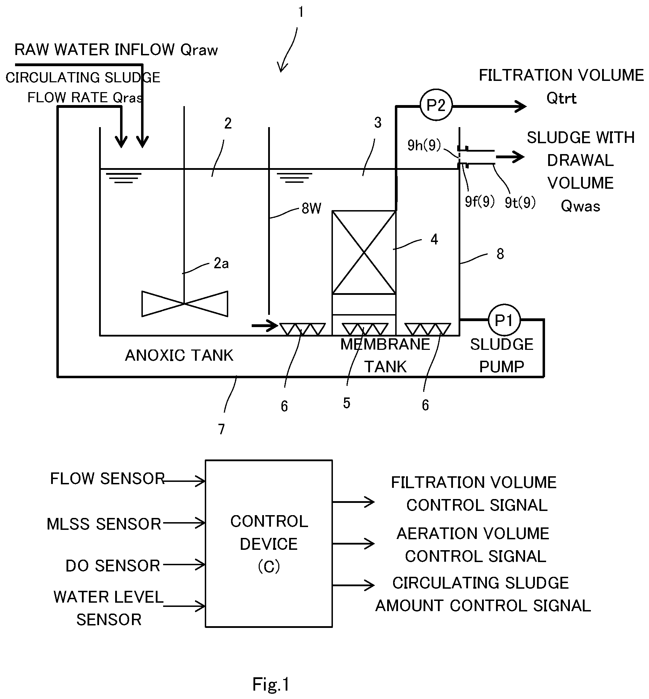

As shown in Fig. 1, a water treatment apparatus 1 includes: a biological treatment tank 8 including an anoxic tank 2 and an aerobic tank 3 in which a membrane separation device 4 is installed in an immersed state; a sludge circulation path 7 configured to circulate sludge from the aerobic tank 3 to the anoxic tank 2; and a control device C.

The control device C is configured with a computer including a CPU board, a memory board, an input-output unit, a display unit, etc. A control program for the water treatment apparatus 1 is stored in a memory mounted on the memory board, and the control program is executed by a CPU mounted on the CPU board, whereby operation of the water treatment apparatus 1 is controlled.

To the input-output unit, signals from various sensors installed on the biological treatment tank 8 are inputted, such as a flow sensor, an MLSS sensor, a DO sensor, a water level sensor, and a pressure sensor configured to detect a transmembrane pressure difference of the membrane separation device 4. From the input-output unit, a control signal for each load is output, such as a filtration volume control signal for the membrane separation device 4, an aeration volume control signal for an aeration device 5 and an auxiliary aeration device 6, and a circulating sludge amount control signal for a sludge pump P1.

The flow sensor includes a sensor configured to measure a raw water inflow, a sensor configured to measure an amount of circulating sludge, a sensor configured to measure a flow rate of treated water, and the like. The MLSS sensor, DO sensor, and water level sensor are installed on the aerobic tank 3. Moreover, the display unit is configured with a touch-panel liquid crystal display, and is configured to enable an operator to set and enter a variety of information via a screen.

Raw water flowing in the anoxic tank 2 is mixed with activated sludge in the tank by a stirring mechanism 2a, and then flows down from an opening in a lower portion of a partition wall 8W to the aerobic tank 3. In the aerobic tank 3, aerobic microorganisms cause oxidative decomposition of organic matters in aerobic environment due to the auxiliary aeration device 6, nitrification treatment of ammonia components is also performed, and a part of the purified water to be treated is extracted as treated water through the membrane separation device 4. The water to be treated in the aerobic tank 3 is circulated and transported together with the sludge to the anoxic tank 2 via the sludge pump P1 and the sludge circulation path 7. The water to be treated circulated and transported to the anoxic tank 2 together with the sludge is subjected to denitrification treatment by anaerobic microorganisms in anaerobic environment.

The sludge proliferated in the biological treatment tank 8 naturally flows out of the tank along an overflow path 9 configured with: an overflow hole 9h formed in an upper portion of a sidewall of the biological treatment tank 8; a flange pipe 9f installed on the overflow hole 9h; and a sludge withdrawal pipe 9t coupled to the flange pipe 9f, and is treated in an excess sludge treatment apparatus such as a sludge storage tank (not shown).

In the aerobic tank 3, a plurality of membrane separation devices 4 are installed in an immersed state, and on both sides of the membrane separation devices 4, the auxiliary aeration devices 6 that facilitate aerobic treatment are installed. Each of the membrane separation devices 4 includes a membrane case with openings at its top and bottom, and inside the membrane case, a plurality of plate-like membrane elements are arranged at regular intervals with each membrane surface in a vertical position. The membrane surfaces are purified by an upward flow generated by aeration from the aeration device 5 disposed under the membrane case.

Each of the aeration device 5 and the auxiliary aeration device 6 includes a diffuser pipe in which a plurality of aeration holes are formed, and is coupled to a blower installed outside the tank via an aeration header coupled to the diffuser pipe. Each membrane element is coupled to a collecting pipe via a tube, and the collecting pipe is coupled to a pump P2 as a suction mechanism installed outside the tank. By adjusting suction pressure of the pump P2 so as to make the transmembrane pressure difference equal to a predetermined value, a filtration volume Qtrt from the membrane separation device 4 is controlled.

The control device C sets a withdrawal coefficient K (K<1) as a control factor such that a sludge withdrawal volume Qwas satisfies: sludge withdrawal volume Qwas = raw water inflow Qraw × K; operates the membrane separation device 4 such that the filtration volume Qtrt from the membrane separation device 4 satisfies: filtration volume Qtrt = raw water inflow Qraw × (1-K); and causes natural overflow of the excess sludge from the overflow path 9 disposed on the biological treatment tank 8. The sludge moves upward according to the upward flow generated by aeration due to the aeration device 5, and water to be treated with a high sludge concentration overflows from the overflow path 9.

To avoid overflow of the sludge from the biological treatment tank 8 in case of occurrence of abnormality, the overflow path 9 as a safety mechanism, which is previously installed on the biological treatment tank 8, is used for sludge withdrawal to thereby cause natural overflow of the excess sludge. As a result, there is no need for an operator to perform the sludge withdrawal operation using the conventional sludge withdrawal pipe 11 shown in Fig. 5, that is, operation of the sludge pump P1 and opening and closing operation of the withdrawal valve 10.

When the withdrawal coefficient K satisfies K>0, a water level in the biological treatment tank 8 rises and the excess sludge naturally overflows from the overflow path 9. It is also possible to actively lower the water level in the biological treatment tank 8 by setting the withdrawal coefficient K to satisfy K<0.

The withdrawal coefficient K may be set as appropriate by the operator via the touch-panel liquid crystal display. For example, the withdrawal coefficient K can be set based on a sludge conversion rate relative to the raw water inflow Qraw captured by the flow sensor or the like. The sludge conversion rate refers to an amount of sludge generated relative to an amount of organic matters treated by the water treatment equipment. For example, a BOD sludge conversion rate refers to an amount of increase in sludge (kg) relative to a BOD inflow (kg), obtained according to a calculation formula, such as {excess sludge concentration (mg/L) × excess sludge withdrawal volume (m³/day)} ÷ {wastewater BOD concentration (mg/L) × amount of wastewater (m³/day)}.

In order to address the constant change in the raw water inflow Qraw, the control device C measures the raw water inflow Qraw at a predetermined time interval, and sets an update of the filtration volume Qtrt at the predetermined time interval based on the measurement result. The predetermined time is not particularly limited, and may be set within a range of 10 minutes to several hours.

Additionally, the control device C regularly or irregularly measures MLSS of the biological treatment tank 8, and performs increase or decrease adjustment of the withdrawal coefficient K based on the measured MLSS.

When the MLSS of the biological treatment tank 8 falls below an appropriate range, the withdrawal coefficient K is decreased to reduce the sludge withdrawal volume (increase the filtration volume), thereby returning the MLSS to the appropriate range. When the MLSS increases above the appropriate range, the withdrawal coefficient K is increased to increase the sludge withdrawal volume (decrease the filtration volume), thereby returning the MLSS to the appropriate range. Accordingly, it is possible to operate the water treatment apparatus 1 while maintaining it in a stable state.

Furthermore, the control device C preferably measures the water level in the biological treatment tank 8 and controls to increase or decrease the withdrawal coefficient K for adjustment when the measured water level deviates from a predetermined acceptable range.

When the water level in the biological treatment tank 8 deviates from the predetermined acceptable range, abnormal fluctuation in the water level can be prevented before it happens by performing increase or decrease adjustment of the withdrawal coefficient K. For example, when the filtration volume Qtrt is large relative to the raw water inflow Qraw, the withdrawal coefficient K may be set to a large value so as to avoid rapid decrease in the water level. When the filtration volume Qtrt is small relative to the raw water inflow Qraw, the withdrawal coefficient K may be set to a small value so as to avoid rapid increase in the water level.

The control device C is configured to notify an abnormal state via a notification mechanism when the water level in the biological treatment tank 8 deviates from the predetermined acceptable range. As the notification mechanism, a ringing device, a mailer device configured to notify the operator of abnormality occurrence, or the like is used. Notification of the abnormal state via the notification mechanism alerts the operator to avoid a serious accident before it happens.

### [Second Embodiment]

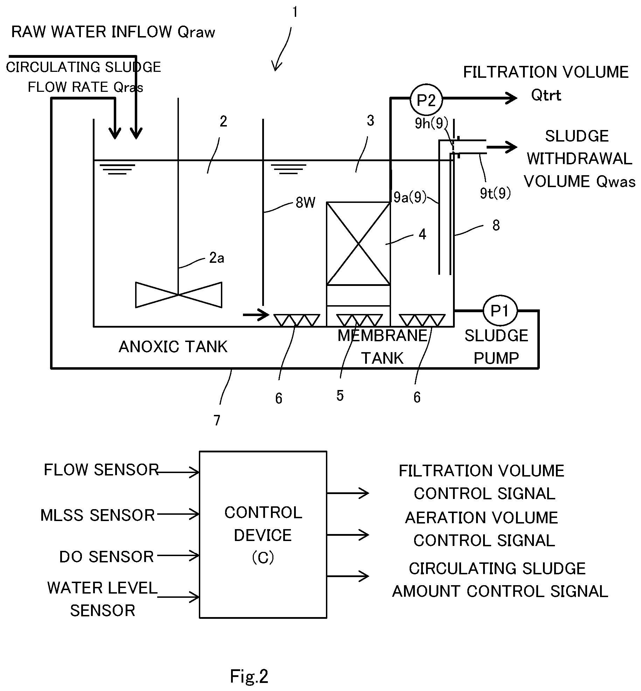

In the above-described embodiment, described is the example in which the overflow path 9 is configured with: the overflow hole 9h formed in the upper portion of the sidewall of the biological treatment tank 8; the flange pipe 9f installed on the overflow hole 9h; and the sludge withdrawal pipe 9t coupled to the flange pipe 9f, but the configuration of the overflow path 9 is not limited to such an aspect. For example, it may be the aspect as shown in Fig. 2.

In other words, the overflow path 9 is configured with: a vertical pipe 9a disposed along the sidewall of the biological treatment tank 8; the flange pipe 9f installed on the overflow hole 9h formed in the sidewall of the biological treatment tank 8; and the sludge withdrawal pipe 9t. The vertical pipe 9a has an open lower end, and an upper end side thereof is coupled to one end of the flange pipe 9f and the other end of the flange pipe 9f is coupled to the sludge withdrawal pipe 9t. By exposing a part of the upper end side of the vertical pipe 9a to the atmosphere or filling the overflow path 9 with water in advance, the sludge naturally flows out when the liquid level of the water to be treated in the biological treatment tank 8 rises above the position where the overflow hole 9h is formed.

### [Third Embodiment]

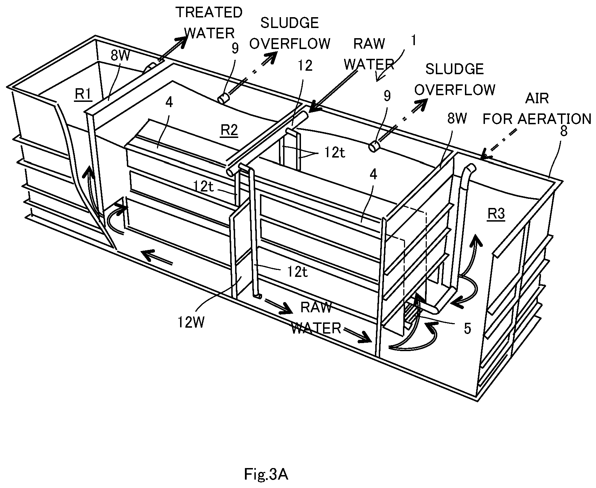

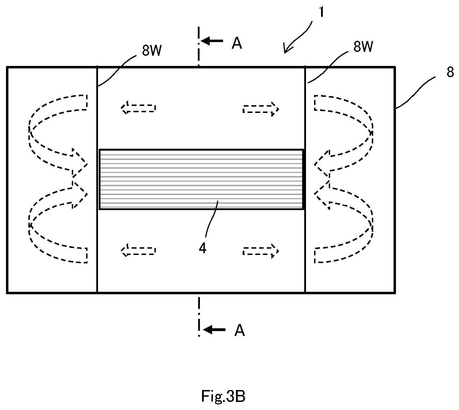

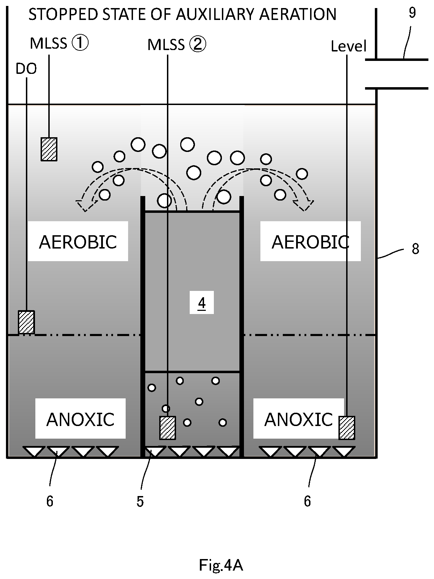

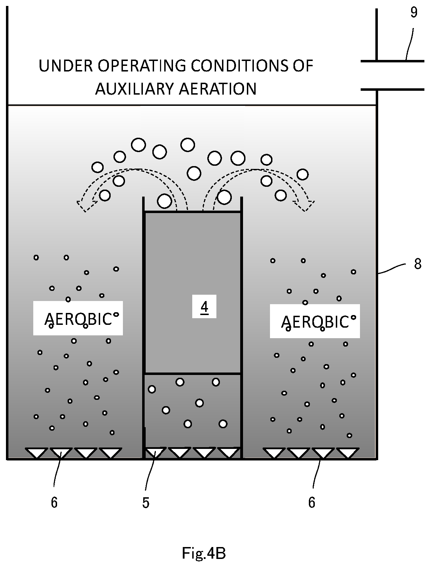

Figs. 3A, 3B, 4A, and 4B show the water treatment apparatus 1 including the biological treatment tank 8 with a bottom and a sidewall made of iron plates. The rectangular biological treatment tank 8 in plan view is divided into three regions R1, R2, and R3 along a longitudinal direction by two partition walls 8W, and the rectangular membrane separation device 4 in plan view is disposed in an immersed state in the central region R2. The membrane separation device 4 is disposed in the center of the width direction of the central region R2 and a circulating flow of the water to be treated is formed, which rises from the bottom to the top of the membrane separation device 4 due to the upward flow generated by aeration from the aeration device 5 disposed under the membrane separation device 4, and goes down from the top to both sides of the membrane separation device 4.

The auxiliary aeration devices 6 are installed on both sides of the membrane separation device 4 at the bottom of the biological treatment tank 8 (see Figs. 4A, 4B), and the biological treatment function is configured to be switchable such that the entire central region R2 of the biological treatment tank 8 functions as the aerobic tank 3 under operating conditions of the auxiliary aeration devices 6, and in a stopped state of the auxiliary aeration devices 6, an upper part of the central region R2 of the biological treatment tank 8 functions as the aerobic tank 3 and a lower part thereof functions as the anoxic tank 2.

Lower portions of the two partition walls 8W are opened. Through the lower portions of the partition walls 8W, the water to be treated flows in both side regions R1, R3 from the central region R2 divided by the partition walls 8W and then flows in the lower portion of the membrane separation device 4 from the lower portions of the partition walls 8W, and a part thereof is removed as the treated water by the membrane separation device 4.

A raw water inflow pipe 12 is bridged laterally above the center of the central region R2. A raw water inflow branch pipes 12t are installed on both sides of a partition wall 12W to sandwich the same, the partition wall 12W extending from the central portion of the membrane separation device 4 in the longitudinal direction. The raw water is supplied to the bottom of the biological treatment tank 8. In other words, in the biological treatment tank 8, the flow of the water to be treated together with the sludge is formed from the central region R2 to both side regions R1, R3 and from both side regions R1, R3 to above the central region R2 via the lower portion of the membrane separation device 4.

As shown in Fig. 3A, on the sidewall of the biological treatment tank 8 in the central region R2, an overflow path 9 similar to that described in Fig. 1 is disposed, and in the same manner as the control device C in Fig. 1, the withdrawal coefficient K (K<1) is set as the control factor such that the sludge withdrawal volume Qwas satisfies: sludge withdrawal volume Qwas = raw water inflow Qraw × K, the membrane separation device 4 is operated such that the filtration volume Qtrt from the membrane separation device 4 satisfies: filtration volume Qtrt = raw water inflow Qraw × (1-K), and overflow of the excess sludge is naturally caused from the overflow path 9 disposed on the biological treatment tank 8.

As shown in Figs. 4A and 4B, the control device C calculates a circulation ratio of the sludge based on a difference value between values of the MLSS sensor disposed in the upper part of the central region R2 and the MLSS sensor disposed in the lower part (under the membrane separation device 4), and adjusts an aeration volume from the aeration device 5 to make the circulation ratio equal to a target value. In addition, the control device C adjusts an aeration volume by the auxiliary aeration devices 6 to make the value of the DO sensor disposed in the middle part of the central region R2 equal to a target value. Then, the withdrawal coefficient K is adjusted based on the water level detected by the water level sensor and the value from the MLSS sensor in the lower part of the central region R2 (under the membrane separation device 4).

### [Fourth Embodiment]

In the above-described embodiment, described is the example in which the water treatment apparatus 1 includes: the biological treatment tank 8 including the anoxic tank 2 and the aerobic tank 3 in which the membrane separation device 4 is installed in the immersed state; and the sludge circulation path 7 configured to circulate the sludge from the aerobic tank 3 to the anoxic tank 2. However, the biological treatment tank 8 to which the present invention is applied may further include an anaerobic tank configured to remove phosphorous and may be configured to circulate and supply the sludge from the aerobic tank 3 to the anaerobic tank via the sludge circulation path 7.

In the above description, described is the aspect in which the water treatment apparatus 1 is automatically operated by the control device C, but the operator may control the operation of the water treatment apparatus 1 in place of or in cooperation with the control device C.

In other words, the method for operating a water treatment apparatus according to the present invention is a method for operating a water treatment apparatus including: a biological treatment tank including at least an anoxic tank and an aerobic tank in which a membrane separation device is installed in an immersed state; and a sludge circulation path configured to circulate sludge from the aerobic tank to the anoxic tank. The method includes: setting a withdrawal coefficient K (K<1) as a control factor such that a sludge withdrawal volume Qwas satisfies: sludge withdrawal volume Qwas = raw water inflow Qraw × K; operating the membrane separation device such that a filtration volume Qtrt from the membrane separation device satisfies: filtration volume Qtrt = raw water inflow Qraw × (1-K): and causing natural overflow of excess sludge from an overflow path disposed on the biological treatment tank.

Additionally, it is preferable to set an update of the filtration volume Qtrt at a predetermined time interval based on the raw water inflow Qraw measured at the predetermined time interval.

It is further preferable to regularly or irregularly measure MLSS of the biological treatment tank and perform increase or decrease adjustment of the withdrawal coefficient K based on the measured MLSS.

It is preferable to measure a water level in the biological treatment tank and perform increase or decrease adjustment of the withdrawal coefficient K when the measured water level deviates from a predetermined acceptable range.

It is preferable to measure the water level in the biological treatment tank and notify an abnormal state via a notification mechanism when the measured water level deviates from the predetermined acceptable range.

Each of the above-described embodiments is one aspect of the present invention, and the description thereof shall not limit the present invention, not to mention that the specific configurations of the respective sections can be modified and designed as appropriate to the extent that the operations and effects of the present invention can be obtained.

### Reference Signs List

1: water treatment apparatus
2: anoxic tank
3: aerobic tank
4: membrane separation device
5: aeration device
6: auxiliary aeration device
7: sludge circulation path
8: biological treatment tank
9: overflow path

## Claims

1. A method for operating a water treatment apparatus comprising a biological treatment tank comprising at least an aerobic tank in which a membrane separation device is installed in an immersed state, the method comprising:
setting a withdrawal coefficient K (K<1) as a control factor such that a sludge withdrawal volume Qwas satisfies: $sludge withdrawal volume Qwas = raw water inflow Qraw \times K ;$
operating the membrane separation device such that a filtration volume Qtrt from the membrane separation device satisfies:
$filtration volume Qtrt = raw water inflow Qraw \times \left(1-K\right) ;$and
causing natural overflow of excess sludge from an overflow path disposed on the biological treatment tank.

2. The method for operating a water treatment apparatus according to claim 1, the method comprising setting an update of the filtration volume Qtrt at a predetermined time interval based on a raw water inflow Qraw measured at the predetermined time interval.

3. The method for operating a water treatment apparatus according to claim 2, the method comprising regularly or irregularly measuring MLSS of the biological treatment tank and performing increase or decrease adjustment of the withdrawal coefficient K based on the measured MLSS.

4. The method for operating a water treatment apparatus according to claim 3, the method comprising measuring a water level in the biological treatment tank and performing increase or decrease adjustment of the withdrawal coefficient K when the measured water level deviates from a predetermined acceptable range.

5. The method for operating a water treatment apparatus according to claim 3 or 4, the method comprising measuring a water level in the biological treatment tank and notifying an abnormal state via a notification mechanism when the measured water level deviates from a predetermined acceptable range.

6. A water treatment apparatus comprising:
a biological treatment tank comprising at least an aerobic tank in which a membrane separation device is installed in an immersed state; and
a control device configured to:
set a withdrawal coefficient K (K<1) as a control factor such that a sludge withdrawal volume Qwas satisfies:
$sludge withdrawal volume Qwas = raw water inflow Qraw \times K ;$
operate the membrane separation device such that a filtration volume Qtrt from the membrane separation device satisfies:
$filtration volume Qtrt = raw water inflow Qraw \times \left(1-K\right) ;$ and
cause natural overflow of excess sludge from an overflow path disposed on the biological treatment tank.
